# EUROPEAN PATENT APPLICATION

(11) **EP 2 325 606 A2**
(43) Date of publication of application: **25.05.2011**
(21) Application number: 10191580.9
(22) Date of filing: 17.11.2010
(51) Int. Cl.: G01C 21/32

(54) **Method for identifying a candidate part of a map to be updated**

(30) Priority: 18.11.2009 GB 0920186
(71) Applicant: Vodafone Group plc, Newbury, Berkshire RG14 2FN (GB)
(72) Inventor: Lindstrom, Joe, SE 226 49, Lund (SE)
(74) Representative: Sneary, Adrian Bernard

(57) **Abstract**

The present invention relates to a method for identifying a candidate part of a map to be updated. The method comprises receiving position data relating to a plurality of reroute points and determining one or more clusters of reroute points based on the position data. The method further comprises determining cluster features, determining a weight for each of the clusters and generating reroute cluster position data which is transmitted in a last step of the method. By determining clusters of reroute points and corresponding weights, a candidate part of a map to be updated may be identified in an efficient way. A corresponding device and computer program product are also provided.

## Description

### Field of the invention

The present invention relates to the field of digital maps. In particular it relates to a method, a device and a computer program product for identifying a candidate part of a map to be updated.

### Background of the invention

Location Based Services (LBS), for example navigation systems, rely on accurate map data describing for instance road networks, traffic rules, and points of interest. Since the environment is constantly changing - new roads are built, roads are temporarily blocked etc. - the map data has to be maintained and updated in order to include the most recent information. In existing systems, faults and defects in map data are found using a manual procedure. However, this is a very tedious and time consuming job given the size of the data, in particular for global systems.

Several attempts have been made to automate the map updating procedure. WO 2008/045407 discloses an adaptive map building module which monitors travel paths of cellular phones and vehicles and determines whether new roads should be added to a map. The travel paths, which are defined by vector and location data, are compared to known or previously defined roads stored as map data. If one or more vehicles and/or cell phones travel along the same path, the map monitoring module may assume that a new road or path has been built.

By using the above method, i.e. by comparing travel paths with known or previously defined roads, new roads may be found and added to the map. However, other types of problems which are related to the map, such as temporary traffic problems, may not be identified.

### Summary of the invention

It is an object of the present invention to overcome the problems mentioned above, and to provide a method, a device and a computer program product which improves the procedure of identifying a candidate part of a map to be updated.

One object in particular is to provide a method, a device and a computer program product which is efficient and which reduces the need for processing power.

One object in particular is to provide a method, a device and a computer program product which may generate a feasible amount of data relating to a candidate part of a map to be updated from a large data set.

The inventor has realized that by collecting and analyzing reroute positions, map areas in need of update may be identified efficiently. More particularly, the reroute positions are grouped into clusters. Since the clusters are indicative of a potential map problem, they may be used to identify map areas in need of update.

According to a first aspect of the invention the above objects are achieved by a method in a device for identifying a candidate part of a map to be updated, comprising receiving position data relating to a plurality of reroute points, determining, by a processing unit, one or more clusters of reroute points based on the position data, determining, by a processing unit, one or more cluster features for each of the clusters, determining, by the processing unit, a weight for each of the one or more clusters based on the one or more cluster features, generating, by the processing unit, reroute cluster position data pertaining to the one or more clusters and the weight for each of the one or more clusters, and transmitting said reroute cluster position data. Thereby, the one or more clusters and the corresponding weights identify a candidate part of a map to be updated.

A user of a LBS typically follows a route which is suggested by the service. Sometimes, however, the user deviates from the suggested route and starts to follow a new route. This event is referred to as a reroute, and the geographical point where such a reroute occurs is referred to as a reroute point. As the present invention uses reroute points and not full travel paths of a user of a LBS, the processing power is reduced. At the same time, the amount of transmitted and received data is reduced.

In some cases a user intentionally changes routes, for example if he decides to travel to another destination. However, in other cases the reroutes are unintentional and may for example be caused by a map problem such as an error in the map, a software defect or a problem with the traffic situation. One of the realizations on which the present invention is based is that such unintentional reroutes tend to appear in clusters, that is, that reroute points caused by the same map problem are located geographically close to each other. This is due to the fact that an underlying problem with the map or the information relating to the map causes many users to change routes at approximately the same location. Thus, by determining one or more clusters of reroute points, parts of a map where users of the map have been experiencing a problem may be identified.

Further, by determining clusters of reroute points, a large data set of reroute points, perhaps from millions of users, may be converted to a smaller and more feasible data set of clusters. The smaller data set may typically comprise geographical positions of the one or more clusters of reroute points. The data set relating to the one or more clusters of reroute points is referred to as reroute cluster position data.

Moreover, the present invention determines a weight for each cluster. By a weight is meant a value which is obtained as a combination of different cluster features. The weight is typically a measure of how likely it is that a cluster is related to a map problem. For example, the weight may comprise one or several parameters relating the cluster to the likelihood of being related to a map problem. For instance, each such parameter may be a number in some particular interval, such as the interval [0,1], or a word specifying the importance of the cluster. By assigning a weight to each of the one or more clusters, an indication is given of which clusters are most likely to relate to a map problem. Thereby, it becomes easy to identify which part of a map that needs to be updated.

There are a number of factors that may influence how likely it is that a cluster is related to a map problem. These factors are referred to as cluster features. A cluster feature may be an inherent feature of the cluster itself, such as for example the number of reroute points in the cluster, a parameter relating to the shape of the cluster or the variance of the reroute points in the cluster. A cluster feature may also be related to properties of the individual reroute points belonging to the cluster. The properties of the individual reroute points are referred to as attributes.

The inventor has further realized that in order to find the most relevant clusters attributes of the reroutes, i.e. properties of the reroutes, may be used. By using such attributes, the most relevant clusters may be identified in an efficient manner. Therefore, the method may further comprise receiving attributes relating to the reroute points which are comprised in the one or more clusters of reroute points, wherein at least one of the one or more cluster features is determined by using the attributes. An advantage of using attributes when determining at least one of the cluster features is that the performance of the method is improved and that relevant parts of a map to be updated are identified with higher precision.

The attributes may comprise map object data associating each reroute point with at least one map object on the map. This is advantageous since the weights may be made dependent on information which is present in the map.

Optionally, the map object may comprise a road located closest to the reroute point on the map and the map object data may comprise the distance from the reroute point to the road. In this way a cluster which is located off the road network may be given a higher weight than a cluster located on the road network.

Optionally, the map object which is associated with a reroute point may further comprise a point of interest (POI). A point of interest may be any kind of point on the map which is of interest to a user. Examples thereof are gas stations, restaurants, ancient monuments etc. Since a user of a LBS may change his route voluntarily in order to go to a POI, reroutes close to a POI may be intentional reroutes and thus not caused by a map problem. Thus, by using information relating the reroute points to POIs, clusters comprising reroute points being located close to a POI may be assigned a lower weight than a cluster comprising reroute points being located far from a POI.

Typically, most reroute points are located in areas having a dense traffic, such as in a city or on a road carrying a great deal of traffic. Consequently, clusters in such areas usually comprise a larger amount of reroute points than clusters in rural areas. However, a hundred reroute points forming a cluster in a city where thousands of cars pass each day may be less likely to be caused by a map problem than ten reroute points forming a cluster in a rural area where only tens of cars pass each day. Therefore the attributes may comprise traffic amount data associating each reroute point with an amount of traffic. In this way the weight for each cluster may be determined by taking the amount of traffic into account.

Sometimes a user has a habit of changing routes at a particular location. For example, a user may know of a short cut which he prefers to use instead of the route proposed by the LBS. Another situation which commonly occurs is that a sequence of several reroutes points is registered before the user starts to follow a new route. This sequence of reroute points typically takes place within a limited amount of time and/or within a limited geographical area. In order to only take each user into account once when determining the weights the attributes may comprise user data associating each reroute point with a user and wherein the one or more cluster features comprise the percentage of unique users in the cluster.

Optionally, at least one of the one or more cluster features is related to the geographical distribution of reroute points in the cluster. Cluster features related to the geographical distribution or reroute points may for example comprise the variance of the reroute points in the cluster and/or the shape of the cluster. In this way the weight of the clusters may be made dependent on how the points are located within the cluster. For example, a cluster where the reroute points are scattered over a large area, that is where the variance is large, may be assigned a lower weight than a cluster where the reroute points are scattered over a smaller area, that is where the variance is low. Moreover, by considering the shape of the cluster, clusters which follow a (possibly unknown) road may be given a higher weight than a cluster where the reroute points are randomly distributed. The shape of the cluster may for example be considered by using the average distance from each reroute point to its closest neighbor.

Further, the method may comprise determining, by the processing unit, one or more selected clusters by using the weight for each of said one or more clusters, wherein said generating reroute cluster position data pertains to the one or more selected clusters. With this arrangement, the method may select clusters being most likely to indicate a map problem. This reduces the number of clusters and the amount of data generated by the method compared to if all clusters are used.

If reroute points are collected from a vast number of users or if reroute points are collected over a large geographical area and/or during a long time period, the data set of reroute points may be very extensive. In order to reduce the computational effort in such a situation, it may be advantageous to reduce the number of reroute points prior to determining one or more clusters. Therefore, the method may further comprise removing a sub-set of the position data and/or assigning the sub-set of the position data a specific attribute, prior to determining one or more clusters, wherein the sub-set of the position data corresponds to a sub-set of the plurality of reroute points.

The method may further comprise receiving user information associating each of the plurality of reroute points with a user, and identifying reroute points which are associated with the same user,
wherein the removing and/or assigning a specific attribute comprises removing position data and/or assigning a specific attribute to position data corresponding to at least one of the reroute points which are associated with the same user. In this way, sequences of reroutes being caused by a user within a limited amount of time and/or within a limited geographical area may be removed from the data set and/or given a specific attribute.

Optionally, the method may further comprise receiving traffic information relating to positions of known traffic problems, wherein the sub-set of the position data comprises positions of reroute points which are closer to the positions of known traffic problems than a predetermined distance. With this arrangement, reroutes which are caused by traffic problems which are already known may be removed from the data set prior to determining clusters. In this way the computational effort may be reduced. In this way it is also possible to avoid determining clusters that are not related to potential map problems.

The method may further comprise receiving points of interest data relating to positions of points of interest, wherein the sub-set of the position data comprises positions of reroute points which are closer to the positions of points of interest than a predetermined distance. Since reroutes which are close to POIs may be intentional reroutes, such as reroutes close to a gas station or a restaurant, these reroutes may be removed and/or assigned a specific attribute before the clusters are determined. Thereby, the computational efforts may be reduced.

In some situations one may already be aware of regions where many reroutes occur. For example, such information may be available from previous invocations of the method. In order to not considering such regions, the method may further comprise receiving information relating to at least one previously known cluster, identifying, among the one or more clusters of reroute points, clusters of reroute points corresponding to the at least one previously known cluster, and removing, from the one or more clusters, the identified clusters of reroute points corresponding to the at least one previously known cluster. In this way the computational effort may be reduced and the data generated by the method becomes more feasible.

According to a second aspect of the invention the above objects are achieved by a device for identifying a candidate part of a map to be updated, comprising a receiver for receiving position data relating to a plurality of reroute points, a processing unit arranged to determine one or more clusters of reroute points based on the position data, to determine one or more cluster features for each of the clusters, to determine a weight for each of the one or more clusters based on the one or more cluster features, and to generate reroute cluster position data pertaining to the one or more clusters and the weight for each of the one or more clusters, and a transmitter for transmitting the reroute cluster position data.

According to a third aspect of the invention the above objects are achieved by a computer program product stored on a computer-readable medium comprising computer program code portions adapted to perform the method according to the first aspect of the invention when loaded and executed on a computer.

It is noted that the invention relates to all possible combinations of features recited in the claims. The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief description of the drawings

This and other aspects of the present invention will now be described in more detail, with reference to the appended drawings showing a currently preferred embodiment of the invention.
Fig. 1 is a schematic view of a device according to embodiments of the invention,
Fig. 2 is a schematic view of internal components of a device according to embodiments of the invention,
Fig. 3 is a flowchart according to embodiments of the invention,
Figs. 4-11 are map views according to embodiments of the invention,
Fig. 12 is a schematic illustration of the relation between cluster weight, cluster features and reroute point attributes according to embodiments of the invention.

### Detailed description

In the accompanying drawings certain embodiments are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Devices will be described in an operating mode. Like numbers refer to like elements throughout.

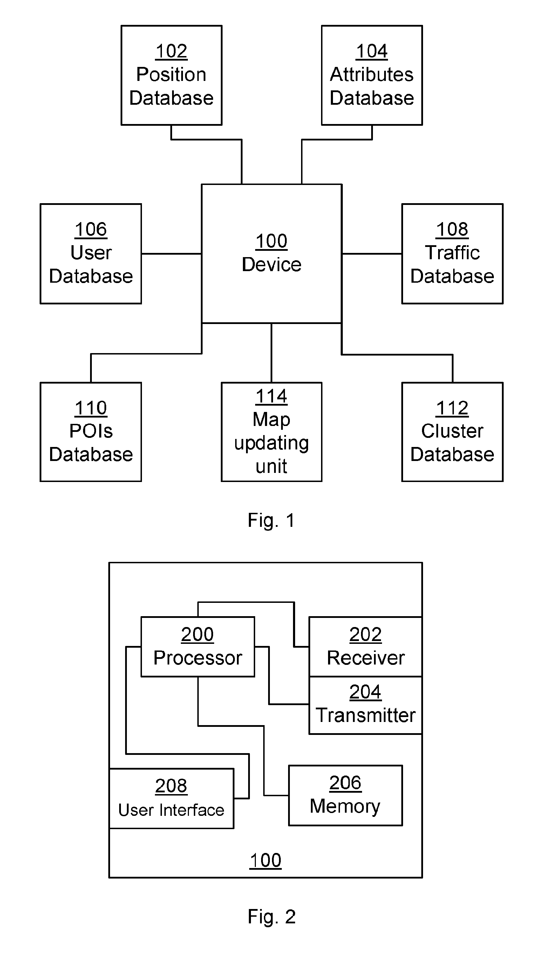

Fig. 1 is a schematic view of a device 100 according to embodiments of the invention. The device 100 may for example be (part of) a workstation or a server. The device 100 may in some embodiments be (part of) a mobile communications device, such as a mobile phone, a personal digital assistant (PDA), a laptop computer and the like. The device 100 is configured to be wired or wirelessly operatively connected to *inter alia* a position database 102, an attributes database 104, a user database 106, a traffic database 108, a POis database 110, a cluster database 112, and a map updating unit 114. The position database comprises position data relating to geographical points. In particular, it may comprise position data relating to the geographical positions of a plurality of reroute points. The attributes database 104 comprises attributes relating to geographical points. In particular it may comprise attributes relating to reroute points. For example, the attributes database may comprise map object data relating to map objects such as roads and POIs. Further, the attributes may comprise information relating to the amount of traffic, the ground area type and whether the reroute point corresponds to a temporary stop. Moreover, the attributes database may comprise user data which for example associates each reroute point with a user. Information relating a reroute point to a user may also be comprised in the user database 106. The traffic database 108 comprises traffic information data. The traffic information data may for instance relate to geographical positions of known traffic problems. The POIs database 110 comprises points of interest data which may relate to geographical positions of POIs and to additional information about different POIs. For example the POis database 110 may comprise locations of gas stations and their opening hours. The cluster database 112 comprises information relating to known clusters or map problems. For example, the cluster database 112 may comprise a list of known map problems. The map updating unit 114 is arranged to receive reroute cluster position data from the device 100 and based on this data the map updating unit 114 may decide whether the map should be updated. In some embodiments the map updating unit 114 may be omitted. In those embodiments the map updating unit 114 may be replaced by one or several persons, deciding if the map should be updated or not. Some of the databases 102, 104, 106, 108, 110, 112 may be comprised in the device 100 as well as the map updating unit 114.

Fig. 2 is a schematic view of internal components of the device 100 of Fig. 1 according to embodiments of the invention. The device 100 comprises a processing unit 200, or processor, which may be a central processing unit (CPU). The processing unit 200 is arranged to be operatively connected to a receiver 202, a transmitter 204, and a memory 206. The receiver 202 is configured to receive data signals from external units, devices, and apparatuses in any known manner. For example, the receiver 202 may be configured to receive data from the position database 102, the attributes database 104, the user database 106, the traffic database 108, the POIs database 110, and the cluster database 112. Further, the receiver 202 may be configured to receive radio signals relating to a position, such as signals from mobile devices. In particular, the receiver 202 may be arranged to receive signals relating to the positions of reroute points from a plurality of mobile devices. Likewise, the transmitter 204 is configured to transmit data signals to external units, devices, and apparatuses in any known manner. The receiver 202 and the transmitter 204 may be part of a common transceiver configured to both receive and transmit data. The memory 206 may be configured to store software instructions pertaining to a computer-implemented method for identifying a candidate part of a map to be updated. The memory 206 may thus form a computer-readable medium which may have stored thereon software instructions. The software instructions may cause the processing unit 200 to execute the method according to embodiments of the present invention.

The device may further comprise a user interface 208 which is arranged to receive user instructions and to present data processed by the processing unit 200 and/or received by the receiver 202 to a user. The user instructions may for example pertain to selecting attributes, cluster features, and/or clusters.

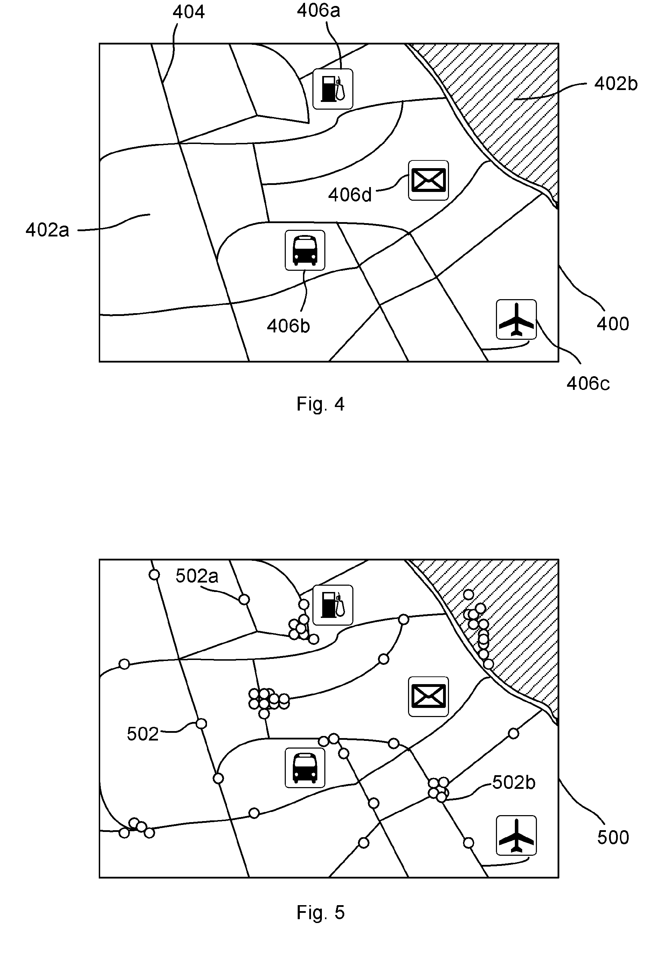

The invention relates to a method for identifying a candidate part of a map to be updated. In map view 400 of Fig. 4 a map is schematically illustrated. The map may comprise different types of map objects. For example it may comprise ground areas 402a-b such as sidewalks, grounds, parking lots, parks, grass, rivers and other bodies of water. Here, 402a illustrates ground and 402b illustrates water. The map objects may further comprise transportation paths 404 such as roads, footpaths, bicycle paths, railways and bridges. The map objects may further comprise buildings, individual trees, landmarks etc. In the example in Fig. 4 the map objects also comprise points of interest 406a-d, here illustrated by a gas station 406a, a bus stop 406b, an airport 406c and a post office 406d.

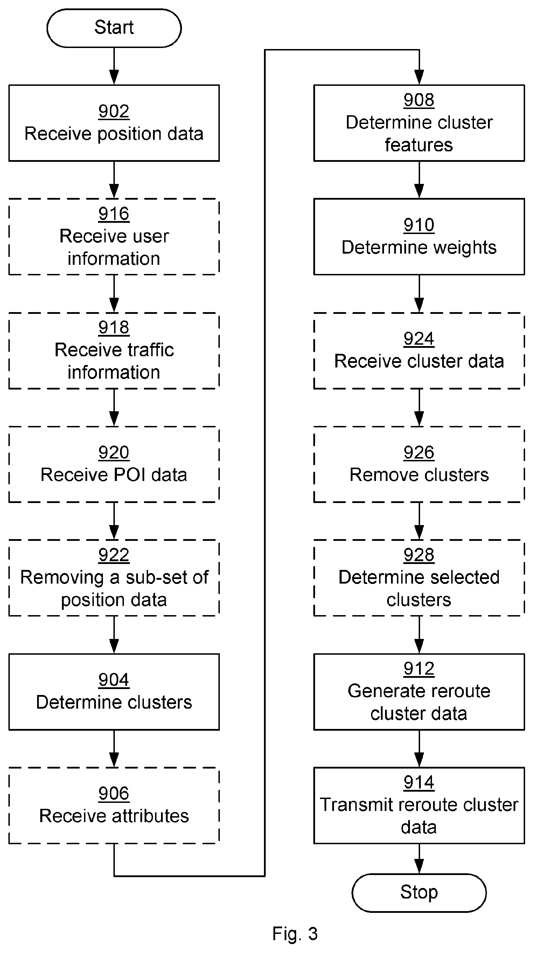

A method for identifying a candidate part of a map to be updated will now be described with reference to the flowchart of Fig. 3.

In step 902, position data relating to a plurality of reroute points is received. The position data, which is received by the receiver 202, may for example be received from the position database 102 which may be an external unit or comprised inside the device 100. Alternatively the position data may be received as signals from a number of remote units, such as mobile phones. In general, the position data comprises information which may be related to a geographical area or to a geographical position. The reroute points are typically geographical points where a user of a LBS has deviated from a route suggested by the LBS. Every time a user of a LBS deviates from a suggested route, position data relating to the geographical position of the reroute point may be transmitted to the device 100. In map view 500 of Fig. 5 a plurality of reroute points 502 are shown. Note that reference numeral 502 refers to the set of all reroute points in Fig. 5. Each reroute point corresponds to a point where a user has deviated from a route. As shown in Fig. 5, some of the reroute points are located alone such as reroute point 502a, whereas other reroute points are located in a group such as reroute point 502b.

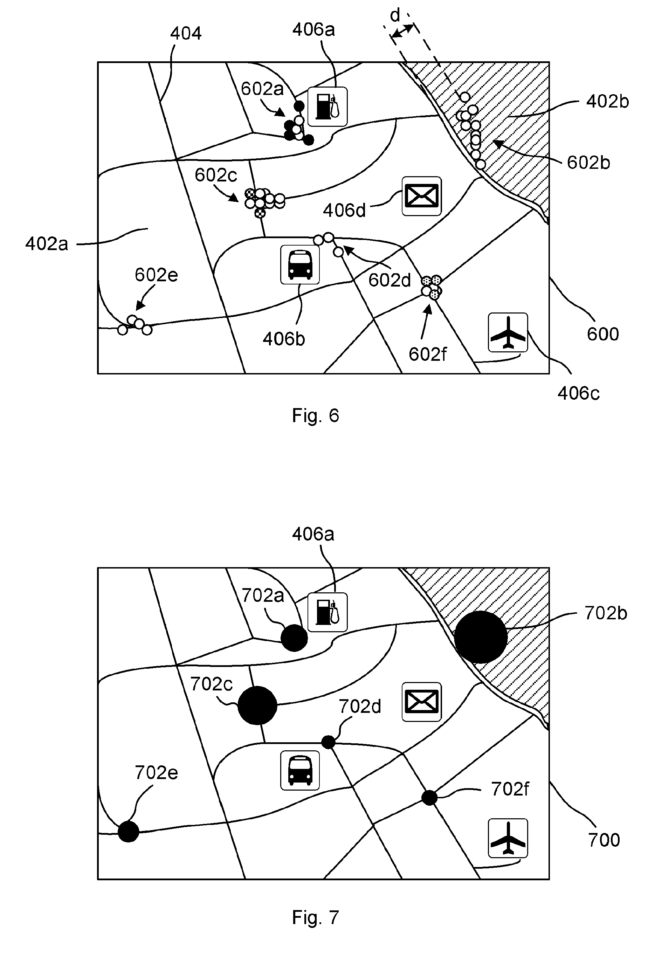

In step 904, which is performed by the processing unit 200, one or more clusters of reroute points are determined based on the position data. The one or more clusters are determined by grouping reroute points which are geographically close to each other. For example, reroute points which are closer to each other than a predetermined distance may be grouped together in a cluster. The predetermined distance may for instance be set by the user of the method. Alternatively, reroute points falling within a circle having a predetermined radius may be grouped into a cluster. Further, a maximum allowed variance of the positions for the reroute points in a cluster may be used when determining clusters. In order to determine clusters of reroute points an algorithm such as the "Quality Threshold algorithm" may be used. In map view 600 of Fig. 6 a number of clusters 602a-f of reroute points are shown. The idea behind step 904 of determining one or more clusters is that problems in the map, such as a road or a coast line which is erroneously indicated on the map or problems related to the map such as road construction work or temporarily blocked roads, are likely to cause many reroutes from the users of the map. Thus, by identifying clusters of reroute points in a map such as clusters 602a-f, problems in a map may be identified. Further, by comparing Figs. 5 and 6 it is seen that reroute points which are located alone, such as reroute point 502a, are not included in any cluster since they are not likely to be caused by a map problem.

In step 906 attributes relating to the reroute points may be received. The attributes may for example be received by the receiver 202 from the attributes database 104. In order to avoid unnecessary data transfer and to save memory capacity, only attributes relating to reroute points which are comprised in a cluster may be received. In general, an attribute is a property of a reroute point. In particular, the attributes may comprise map object data associating each reroute point with a map object, such as the ground areas 402a-b, the transportation paths 404 and the points of interest 406a-f. Further, the map object data may comprise a distance from a reroute point to a closest map object, such as a distance to a road or a point of interest. For example, as shown in Fig. 6, the map object data may comprise the distance d from a reroute point to the closest road. Further, the attributes may comprise traffic amount data relating each reroute point with an amount of traffic. For example the amount of traffic may correspond to an average amount of traffic at the location of the reroute point or an amount of traffic on the closest road. Sometimes the map object data may comprise classification of road segments into classes. Since these classes have a high correlation with the amount of traffic, they may be used to estimate the amount of traffic. Moreover, the attributes may comprise user data associating each reroute point with a user. In the example in Fig. 6, cluster 602c comprises two reroute points which correspond to the same user, namely the two reroute points having the same pattern. Similarly cluster 602f comprises three reroute points which correspond to the same user. The attributes may further comprise an indication whether a reroute point is associated with a temporary stop. A temporary stop occurs if a user first deviates from a route and then returns to the route within a predetermined amount of time. For example, a user may deviate from a route in order to go to a gas station. However, in that case, the user will typically return to the route after a while, for example after 2-15 minutes. Such a temporary stop may be found by considering two reroute points from the same user which occurs within a predetermined time period. In cluster 602a in Fig. 6, the four reroute points which are marked in black illustrate temporary stops. Note that all of these points are located close to the gas station 406a.

In step 908, one or more cluster features for each of the clusters are determined. Step 908 may be performed by the processing unit 200. A cluster feature may be an inherent feature of the cluster itself such as the number of reroute points in the cluster. Further, the cluster features may relate to the geographical distribution of reroute points in the cluster. For example, the cluster features may comprise a parameter relating to the shape of the cluster and/or the variance of the positions of the reroute points in the cluster. Such cluster features may be very useful since true map problems often are characterized by the fact that they are aligned following some road or strongly centered.

A cluster feature may further be related to properties of the individual reroute points belonging to the cluster. In other words, the cluster features may be related to the attributes. An example of a cluster feature which is related to an attribute is the number of reroute points in a cluster which are related to a specific type of ground area 402a-b, such as water 402b. The cluster 602b in Fig. 6 would typically get a high value of such a cluster feature since it is located over water whereas clusters 602a and 602c-f would get low values. In this way, clusters which are located over water and thus are likely to represent a problem in the map, may be differed from clusters located over for example a parking lot.

Another example of a cluster feature which is related to an attribute is the average amount of traffic for the reroute points in a cluster. Such a cluster feature may provide valuable information regarding how indicative the cluster is of a map problem. For example, a cluster comprising ten reroute points which is located in a rural area where the amount of traffic is low may be more indicative of a map problem than a cluster comprising ten reroute points which is located in the middle of a city where the amount of traffic is high. Referring to Fig. 6, cluster 602e which is supposed to be located in a rural area may be considered to be more indicative of a map problem than cluster 602f if the amount of traffic is taken into account, even though cluster 602f comprises a larger amount of reroute points.

Another example of a cluster feature which is related to an attribute is the mean value of the distances to the closest map object of a particular type for all reroutes in a cluster. Such a cluster feature is advantageous since it may be used to find clusters which are located off the road network or to find clusters which are located far from a POI. If the distance to the closest road is used, cluster 602b in Fig. 6 would get a high mean value of the distances to the closest road. Similarly, if the distance to the closest POI is used, cluster 602a in Fig. 6 would get a low mean value of the distances to the closest POI whereas cluster 602e would get a high mean value.

Another example of a cluster feature which is related to an attribute is the percentage of unique users in a cluster. In cluster 602f in Fig. 6 there are six reroute points. Three of these reroute points are associated with the same user and thus there are in total four unique users in the cluster. The percentage of unique users in cluster 602f is therefore 2/3 (=4/6). A cluster where all reroute points are caused by a single user is less likely to represent a map problem since the reroutes may simply be due to the fact that the user prefers to follow a different route. Thus, an advantage of considering the percentage of unique users in a cluster is that the influence of individual users is reduced.

Yet another example of a cluster feature which is related to an attribute is the percentage of reroutes in a cluster that are due to temporary stops. A reroute may be related to a temporary stop which typically may occur close to a gas station or similar. A temporary stop is an example of a reroute event which is intentional and not caused by a map problem. Thus, an advantage of considering the percentage of temporary stops is that the influences of reroute points which are intentional are reduced. In Fig. 6 it is illustrated that the percentage of temporary stops is high close to the gas station 406a.

In principle, only cluster features relating to inherent properties of the clusters could be used. In some embodiments, however, at least one of the cluster features is determined by using the attributes of the reroute points. By using cluster features relating to the attributes, the performance of the method may be improved. This is for example due to the fact that the influence of single user may be reduced and information in the map, such as traffic amount, roads, POIs and type of ground area, may be taken into account.

In step 910 a weight is determined for each of the one or more clusters. The weight may be determined by the processing unit 200. The weight, which for example may be a number, is determined based on the one or more cluster features which are determined in step 908. A purpose of determining a weight for each cluster is to combine the cluster features into a single measure of how likely it is that the cluster is related to a map problem. In this way it becomes easy to analyze the clusters at a later stage, for example in the map updating unit 114 or by a person who is deciding whether the map should be updated or not. There are various ways of determining a weight based on the cluster features. Typically, the cluster features are given in terms of numerical values, and the weight may then be determined as a function of the cluster features. For instance, the weight may be determined as a product of cluster features or as a linear combination of cluster features. In one example, the weight is based on four different cluster features, namely the sum of distances to the closest road, the percentage of unique users in the cluster, the variance of the cluster, and the percentage of temporary stops. In that case a weight may be determined by dividing the product of the sum of distances to the closest road and the percentage of unique users in the cluster by the product of the variance of the cluster and the percentage of temporary stops. However, the skilled person realizes that there are many options for how to choose different cluster features and how to combine them into a weight. Preferably, the same cluster features and the same method for combining them into weight is used for all clusters. However, it is also possible to use different cluster features and/or different methods for determining a weight in different regions. For example, if data from all over Europe are used, different cluster features may be used in Sweden and in France.

In Fig. 7, weights 702a-f have been determined for the clusters 602a-f in Fig. 6. Here, the weight 702b corresponding to cluster 602b is the largest weight. This may for instance be a result of using the sum of distances to the closest road and/or the type of ground area as cluster features. Similarly, the weight 702f corresponding to cluster 602f is quite small compared to for example the weight 702e corresponding to cluster 602e. This may for example be a result of using the percentage of unique users and/or the amount of traffic as cluster features. Moreover, the weight 702a corresponding to cluster 602a may be influenced by the percentage of temporary stops in the cluster and/or the vicinity to the gas station 406a. The weight may also be influenced by inherent properties of the clusters by for example using cluster features relating to the number of reroute points in the cluster or the variance of the cluster. The relatively large weight 702c corresponding to the cluster 602c may for instance be related to the fact that there are many reroute points in the cluster.

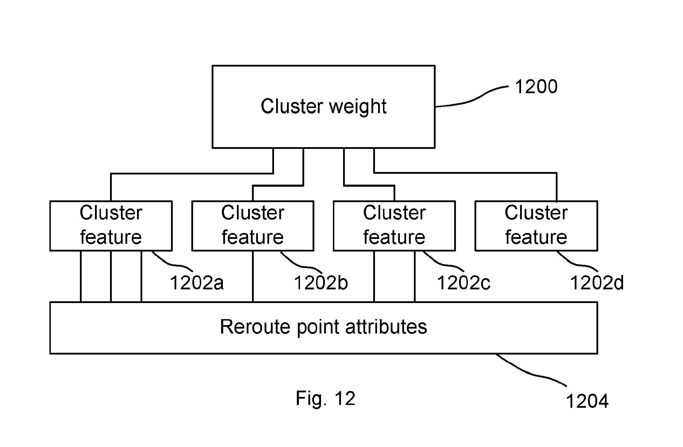

Fig. 12 gives an example of the relation between a cluster weight, cluster features and reroute point attributes for a cluster. For each cluster, a weight 1200 is determined. The weight is in turn determined based on one or more cluster features, here illustrated by the cluster features 1202a-d. The number of cluster features may vary as well as the way the cluster features 1202a-d are combined to form the resulting weight 1200. A cluster feature may relate to an inherent property of the cluster, such as the number of reroute points in the cluster, the shape of the cluster, the variance of the reroute points in the cluster or any other feature which may be determined based on the position data relating to the reroute points. In Fig. 12 this is illustrated by the cluster feature 1202d which may be determined without using any additional information. In some embodiments the cluster features may further be determined by using attributes 1204 which relate to the reroute points. Such attributes may for example relate to an amount of traffic, a distance to a map object, a ground area type, user information etc. One cluster feature may be based on one or several attributes. For example, the cluster feature 1202a is related to three attributes, the cluster feature 1202b is related to one attribute, and the cluster feature 1202c is related to two attributes. The weight 1200 and the cluster features 1202a-d are typically numbers. This is advantageously since numbers are easy to compare to each other. Further, they are easy to store and to perform operations on.

The weight may further comprise several parameters. For example each parameter may correspond to a scenario. One scenario may be to find roads located off the known road network. Another scenario may be to find road construction works. Still another scenario may be to find map problems which relate to an erroneously drawn coast line. Such scenarios may further be received as a user input. In case the weight comprises several parameters, the user of the method may consider different scenarios and in that way consider different types of map problems.

In step 912 reroute cluster position data is generated. The reroute cluster position data may be generated by the processing unit 200. The reroute cluster position data pertains to the one or more clusters and the weight for each of the one or more clusters. For example, the reroute cluster position data may comprise geographical positions of the one or more clusters and/or the geographical positions of the reroute points in the one or more clusters. Further the reroute cluster position data may comprise the cluster features associated with each of the one or more clusters.

In step 914 the reroute cluster position data is transmitted. The reroute cluster position data may be transmitted by the transmitter 204. For example, the reroute cluster position data may be transmitted to the map updating unit 114 or to a display of the device 100.

If reroute points are received from many users and/or if the reroute points are collected from a large geographical region, such as a whole continent, the amount of data to be processed may be huge. In order to reduce the computational burden, one may therefore in step 922 prior to determining clusters in step 904 remove a sub-set of the position data. If a sub-set of the position data is removed, the computational effort to determine clusters will be reduced.

Optionally, the removing 922 of a sub-set of position data may be based on further information which for example may be received in steps 916, 918, and 920.

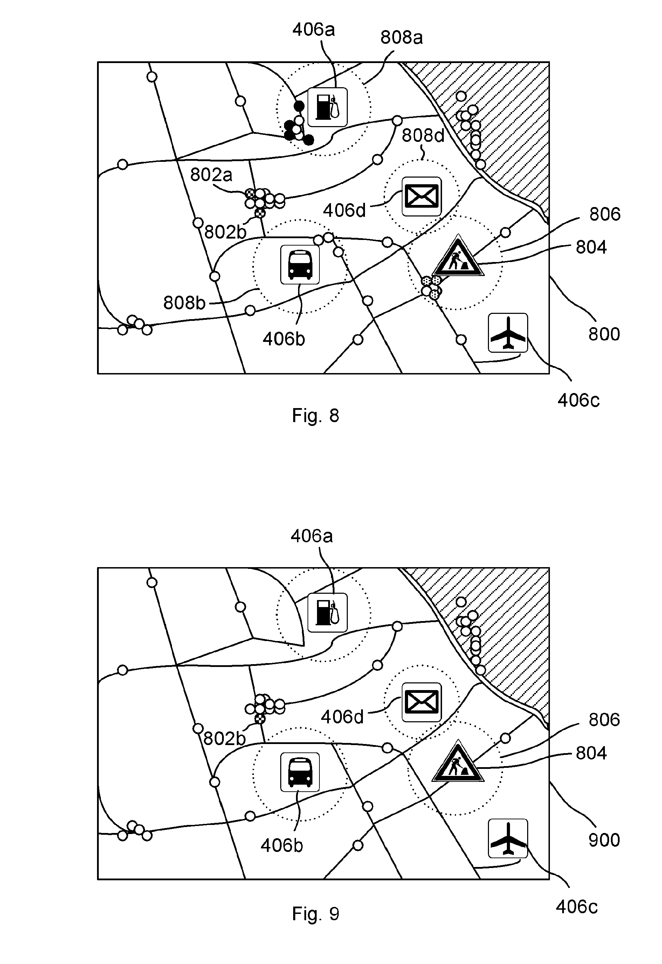

In step 916, user information associating each of the plurality of reroute points with a user may be received. The user information may for example be received from the user database 106. The user information may be used to identify reroute points which are associated with the same user, and to remove at least one of the reroute points which are associated with the same user. An advantage is that it is possible to remove reroute points associated with the same user, this since some users may be overrepresented in the data set. It is also possible to assign reroute points associated with the same user a specific attribute. The attribute may then be used when calculating the cluster weights. Further, a reroute event is often followed by several reroute events before a user starts to follow a new route. However, since the whole sequence of reroutes are likely to be caused by the same map problem or be due to the same reason, it is enough to save the first reroute event in the sequence. Moreover, a particular user may have a habit of changing routes at a particular location. Therefore, it may be advantageous to remove reroute points which are related to the same user and which are located within a predetermined distance from each other and/or which are recorded within a predetermined time span. In map view 800 of Fig. 8, the reroute points 802a and 802b are related to the same user. Moreover, reroute points 802a and 802b are located geographically close to each other. Perhaps they were even recorded within a predetermined time span, such as 1 minute. The method may therefore remove one of these reroute points, which is the case in map view 900 of Fig. 9 where reroute point 802a has been removed.

In step 918, traffic information relating to positions of known traffic problems may be received. The traffic information may be received from the traffic database 108. The traffic information may for example relate to road construction works and temporarily blocked roads etc. In Fig. 8, information relating to a road construction work 804 is shown. Apparently some of the reroute points are located within a predetermined distance from the road construction work, here illustrated by the dotted circle 806, and these reroute points are likely to be caused by the road construction work. Therefore, the method may, as illustrated in Fig. 9, remove the reroute points which are located within the circle 806. In this way, reroute points which are caused by known map problems may be removed before clusters of reroute points are determined. Thereby, the computational effort of the method may be reduced.

In step 920, POI data may be received. The POI data may be received from the POIs database 110. Reroute points close to POIs, such as a gas station, a bus stop, a restaurant, and a post office, are often intentional reroutes. Therefore, these reroutes may not give any information about map problems and may therefore be removed from the cluster analysis and/or assigned a specific attribute. The attribute may then be used when calculating the weight of the cluster. In Fig. 8, information relating to the POIs 406a-d has been received. Several reroute points are located within a predetermined distance from the POIs 406a-d, here indicated by the dotted circles 808a-b and 808d. The distances may be different for different POIs or different types of POIs. For example, as shown in Fig. 8, a gas station may have a larger predetermined distance than a post office. Further, some POIs may not be associated with a predetermined distance, such as the airport in Fig. 8, meaning that no reroute points should be removed because of that particular POI. In map view 900 of Fig. 9, reroute points within the predetermined distances from the POIs are removed. Similarly reroute points may be removed if they are associated with a temporary stop.

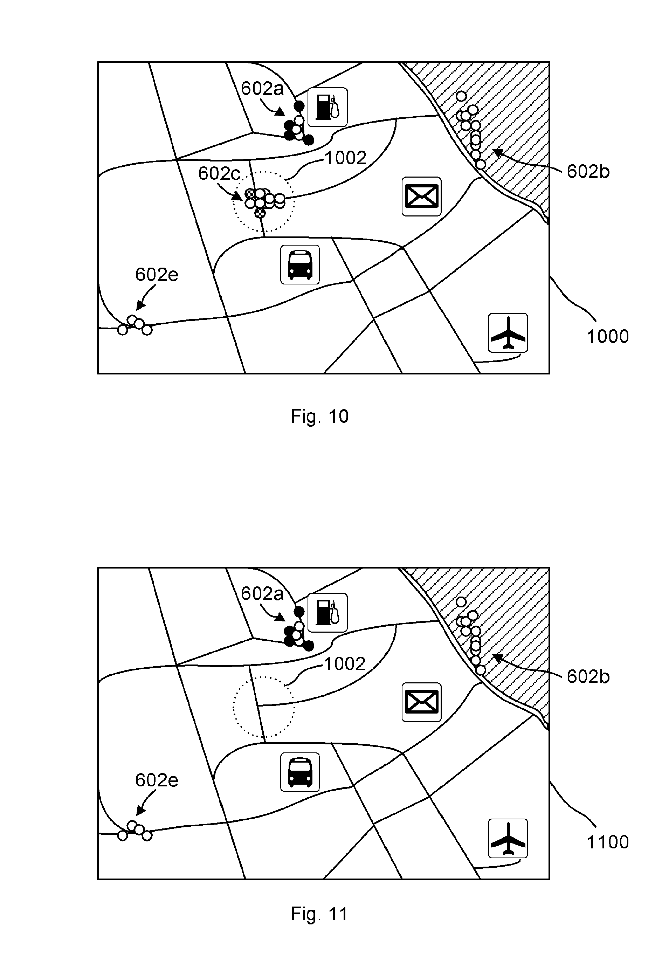

The method may further comprise the step 928 of determining one or more selected clusters. Step 928 may be performed by the processing unit. The one or more selected clusters may be determined by using the weight which is determined for each of the clusters. For example, the clusters which correspond to the largest weights may be selected. In Fig. 7, the weights 720a-f corresponding to clusters 602a-f are shown. If, as an example, the clusters corresponding to the four largest weights are selected, clusters 602a-c and cluster 602e would be selected, see map view 1000 of Fig. 10.

Optionally, in step 926, some of the clusters may be removed. Step 926 may be performed by the processing unit 200. The removing of clusters may be based on information relating to at least one known cluster which may be received from the cluster database 112 in step 924. Such information may comprise a list of known map problems which for instance may be known from previous invocations of the method. The information may further relate to areas where many reroutes occurs for some acceptable reason, such as close to an exit point of a tunnel system where users may lose their localization ability. An advantage of removing clusters corresponding to previously known clusters is that the computational effort is reduced in the long run since clusters which are already known do not have to be considered several times. In some embodiments the clusters which correspond to a previously known cluster are not removed but are instead given a specific attribute. The specific attribute may for example comprise an indication that the cluster is already known and therefore should be treated differently in the analysis. For example, the clusters being assigned a specific attribute may be omitted from the step of determining cluster features and/or the step of determining weights. Alternatively, the specific attribute may be taken into account when determining the cluster features and/or the weights. In the example in Fig. 10, information has been received regarding a previously known cluster, here indicated by the dotted circle 1002. By comparing the location of the previously known cluster 1002 to the locations of the clusters 602a-c and 602e in Fig. 10, one may identify that the previously known cluster 1002 corresponds to cluster 602c. In Fig. 11, cluster 602c is removed and, thus only clusters 602a-b and 602e remain.

The person skilled in the art realizes that the present invention by no means is limited to the embodiments described above. On the contrary, many modifications and variations are possible within the scope of the appended claims. For example, all reroute points corresponding to a specific user may be removed, reroute points located in a certain region may be removed, the device 100 may be connected to a display which is arranged to display the clusters, the number of users of the LBS in a certain region may be taken into account when determining the weights, additional user information relating to whether the user has his LBS-program turned on or off may be used when determining the cluster features, the shape of the cluster which for instance may be computed by using the distance to the closest neighboring reroute point may be used as a cluster feature, and other types of cluster algorithms may be used.

## Claims

1. A method performed in a device for identifying at least one candidate part of a map to be updated, comprising
receiving position data relating to a plurality of reroute points, determining, by a processing unit, one or more clusters of reroute points based on said position data,
determining, by said processing unit, one or more cluster features for each of said clusters,
determining, by said processing unit, a weight for each of said one or more clusters based on said one or more cluster features,
generating, by said processing unit, reroute cluster position data pertaining to said one or more clusters and said weight for each of said one or more clusters, and
transmitting said reroute cluster position data.

2. The method according to claim 1, further comprising
receiving attributes relating to said reroute points which are comprised in said one or more clusters of reroute points, wherein at least one of said one or more cluster features is determined by using said attributes.

3. The method according any one of claims 1 or 2, wherein said attributes comprise map object data associating each reroute point with at least one map object on said map.

4. The method according to claim 3, wherein said at least one map object which is associated with a reroute point comprises a road located closest to the reroute point on said map and said map object data comprises the distance from the reroute point to said road.

5. The method according to claim 3, wherein said at least one map object which is associated with a reroute point comprises a point of interest.

6. The method according to any one of claims 2-5, wherein said attributes comprise traffic amount data associating each reroute point with an amount of traffic.

7. The method according to any one of claims 2-6, wherein said attributes comprise user data associating each reroute point with a user and wherein said one or more cluster features comprise the percentage of unique users in the cluster.

8. The method according to any one of claims 1-7, wherein at least one of said one or more cluster features is related to the geographical distribution of reroute points in the cluster.

9. The method according to any one of claims 1-8, further comprising determining, by said processing unit, one or more selected clusters by using said weight for each of said one or more clusters, wherein said generating reroute cluster position data pertains to said one or more selected clusters.

10. The method according to any one of claims 2-9, further comprising removing a sub-set of said position data and/or assigning said sub-set of said position data a specific attribute, prior to said determining one or more clusters, said sub-set of said position data corresponding to a sub-set of said plurality of reroute points.

11. The method according to claim 10, further comprising
receiving traffic information relating to positions of known traffic problems,
wherein said sub-set of said position data comprises positions of reroute points which are closer to said positions of known traffic problems than a predetermined distance.

12. The method according to any one of claims 10-11, further comprising
receiving points of interest data relating to positions of points of interest,
wherein said sub-set of said position data comprises positions of reroute points which are closer to said positions of points of interest than a predetermined distance.

13. The method according to any one of claims 1-12, further comprising
receiving information relating to at least one previously known cluster, identifying, among said one or more clusters of reroute points, clusters of reroute points corresponding to said at least one previously known cluster, and
removing, from said one or more clusters, the identified clusters of reroute points corresponding to said at least one previously known cluster.

14. A device for identifying at least one candidate part of a map to be updated, comprising
a receiver for receiving position data relating to a plurality of reroute points,
a processing unit arranged to determine one or more clusters of reroute points based on said position data, to determine one or more cluster features for each of said clusters, to determine a weight for each of said one or more clusters based on said one or more cluster features, and to generate reroute cluster position data pertaining to the one or more clusters and the weight for each of said one or more clusters, and
a transmitter for transmitting said reroute cluster position data.

15. A computer program product stored on a computer-readable medium comprising computer program code portions adapted to perform the method according to any of claims 1-13 when loaded and executed on a computer.
